# EUROPÄISCHE PATENTSCHRIFT

(11) **EP 3 650 306 B1**
(45) Veröffentlichungstag und Bekanntmachung des Hinweises auf die Patenterteilung: **15.01.2025**
(21) Anmeldenummer: 19202136.8
(22) Anmeldetag: 09.10.2019
(51) Int. Cl.: B61F 5/08, B61F 5/30, F16F 1/373

(54) **FEDERVORRICHTUNG FÜR EINE FEDERELASTISCHE LAGERUNG VON FAHRZEUGTEILEN, INSBESONDERE VON RADACHSEN IN DREHGESTELLEN**
SPRING DEVICE FOR THE SPRING-ELASTIC MOUNTING OF VEHICLE PARTS, ESPECIALLY WHEEL AXLES IN BOGIES
DISPOSITIF DE RESSORT POUR UNE SUSPENSION ÉLASTIQUE DES PIÈCES DE VÉHICULE, EN PARTICULIER DES AXES DE ROUE DANS LES BOGIES

(30) Priorität: 12.11.2018 DE 202018106398 U
(43) Veröffentlichungstag der Anmeldung: 13.05.2020
(73) Patentinhaber: Ackmann, Dirk, 31840 Hessisch Oldendorf (DE)
(72) Erfinder: Ackmann, Dirk, 31840 Hessisch Oldendorf (DE)
(74) Vertreter: Jabbusch, Matthias

(56) Entgegenhaltungen:
- EP-A1- 0 396 161
- DE-B- 1 100 395
- DE-U- 1 796 012

## Beschreibung

Die Erfindung betrifft eine Rollfeder aus einem Federgehäuse, einem Federdorn und wenigstens einem Elastomerring, wobei zwischen Federgehäuse und Federdorn ein Ringspalt ausgebildet ist, mit dessen Spaltwandungen eine den Elastomerring axialbeweglich aufnehmende Laufbahn ausgebildet ist.

Derartige Rollfedern sind insbesondere aus der Schienenfahrzeugtechnik bekannt, wo sie zur federelastischen Lagerung der in Drehgestellen laufenden Radachsen, der an Fahrzeugrahmen angelenkten Drehgestelle oder der auf Fahrzeugrahmen aufgebauten Wagenkästen eingesetzt werden. Bei einer Beaufschlagung der Rollfeder mit axialen Kräften rollt der Elastomerring in seiner Laufbahn auf und ab, wobei die Federkennlinie von den Abrollkonturen abhängig ist, die sich an den Spaltwandungen des Ringspaltes abbilden. Der Zusammenbau der Rollfeder erfordert ein aufwendiges Einpressen des Elastomerringes in das Federgehäuse hinein. Das Einpressen erfolgt in speziell für diese Anwendung vorgesehenen Spezialvorrichtungen. Wie bei anderen Federn wird auch die Lebensdauer der Rollfeder durch das Federelement selbst, hier also durch den Elastomerring, bestimmt. Aus diesem Grund wird der Elastomerring als austauschbares Verschleißteil ausgeführt. Für den Einbau eines neuen Elastomerringes bedarf es deshalb der beim Hersteller betriebenen Spezialvorrichtungen. Folglich muss die Rollfeder zum Austausch ihres Elastomerringes ausgebaut und an ihren Hersteller versendet werden. Nach erfolgreichem Austausch ihres Elastomerringes erfolgt der Rückversand und Wiedereinbau der Rollfeder. Aufgrund des hohen Eigengewichtes einer einzelnen Rollfeder macht hier Ausbau, Versand und Wiedereinbau einen nachteilig großen Anteil an den für das Auswechseln des Elastomerringes anfallenden Gesamtkosten aus.

Aus dem Dokument EP 0 396 161 A1 sind auch Rollfedern bekannt, bei denen der Gummiring unter Vorspannung zwischen einem äußeren Ring und einem inneren Ring angeordnet ist, so dass diese Teile ein austauschbares Federelement bilden, und dass der Außendurchmesser des äußeren Ringes und der Innendurchmesser des inneren Ringes so bemessen sind, dass das Federelement mit einer Spiel-, Übergangs- oder Preßpassung zwischen Federgehäuse und Federdorn eingefügt ist.

Der Erfindung liegt deshalb die Aufgabe zugrunde, eine Rollfeder der eingangs genannten Gattung aufzuzeigen, bei welcher der Austausch ihres Elastomerringes maßgeblich vereinfacht ist.

Diese Aufgabe ist erfindungsgemäß durch eine Rollfeder mit den Merkmalen des Patentanspruches 1 gelöst. Vorteilhafte Weiterbildungen der Erfindung sind in den Unteransprüchen angegeben.

Die erfindungsgemäße Rollfeder zeichnet sich dadurch aus, dass das Federgehäuse eine Gehäusebasis und ein von der Gehäusebasis über eine lösbare Verbindung abnehmbares Gehäuseteil aufweist, und dass in dem Gehäuseteil wenigstens dasjenige Bahnende der Laufbahn gelegen ist, in welchem der Elastomerring seine stabile Ausgangslage hat. Zum Austausch ihres Elastomerringes ermöglicht die erfindungsgemäße Rollfeder vorteilhaft die Handhabe nur eines Teils der Rollfeder, nämlich des abnehmbaren Gehäuseteiles, welches den Elastomerring bei unbelasteter Rollfeder aufnimmt. In der Gehäusebasis ist mit Ausnahme desjenigen Bahnendes der Laufbahn, in welchem der Elastomerring seine stabile Ausgangslage hat, die überwiegende Bahnstrecke der Laufbahn gelegen, in welche der Elastomerring bei axialer Belastung der Rollfeder hineinrollt und dort den Federungseffekt erzeugt. Die Gehäusebasis des Federgehäuses kann beim Austausch des Elastomerringes vorteilhaft in ihrer technischen Struktur, beispielsweise in einem Drehgestell eines Schienenfahrzeuges, verbaut bleiben. Folglich ist mit dem abnehmbaren Gehäuseteil eine leichte Baugruppe geschaffen, deren für den Austausch des Elastomerringes erforderlicher Ausbau, Versand und Wiedereinbau maßgeblich vereinfacht sind.

Erfindungsgemäß sind nur der Elastomerring und das abnehmbare Gehäuseteil zu einer Wechseleinheit miteinander verpresst. Mit der Verpressung wird eine Vorspannung generiert, mit welcher der Elastomerring über seine gesamte Lebensdauer hinweg an einen vorbestimmten Bewegungsablauf mit vorbestimmter Federkernlinie gebunden ist. Im Rahmen der Erfindung umfasst das Verpressen des abnehmbaren Gehäuseteiles mit dem Elastomerring das Verbinden dieser Bauteile unter messtechnischer Einhaltung vorgegebener Raumlagen zueinander.

Vorzugsweise ist die zwischen der Gehäusebasis und dem abnehmbaren Gehäuseteil ausgebildete lösbare Verbindung eine Verschraubung. Grundsätzlich besteht jedoch auch die Möglichkeit, die lösbare Verbindung als Bajonettverschluss, als Spannbügelverschluss, Nietverbindung, Federstiftverbindung oder Rastverbindung auszuführen.

Nach einer anderen Weiterbildung der Erfindung weist der Federdorn einen seinen Federweg am Federgehäuse begrenzenden Anschlag auf. Der Anschlag verhindert ein unbeabsichtigtes Trennen von Federgehäuse und Federdorn, beispielsweise beim Heben, insbesondere beim Verkranen eines Fahrzeuges mit Rollfedern aufweisendem Fahrwerk. Zum Auswechseln des Elastomerringes bedarf es allerdings einer vorherigen Demontage des Anschlags.

Vorzugsweise weist der Anschlag wenigstens eine an der Gehäusebasis ausgebildete Anschlagfläche auf. Grundsätzlich liegt es jedoch im Rahmen der Erfindung, die Anschlagfläche am abnehmbaren Gehäuseteil derart auszubilden, dass das Herstellen und Lösen des Anschlages funktional bereits mit dem Zusammenfügen und Trennen von Gehäusebasis und abnehmbaren Gehäuseteil erreicht ist. Vorzugsweise ist der Anschlag durch eine den Federdorn im abnehmbaren Gehäuseteil aufnehmende Gehäuseöffnung ausgebildet, aus welcher der Federdorn nur bei geöffnetem Federgehäuse in Richtung Gehäuseinneres herausbewegbar ist. Bei einer derartigen Ausführung wird die mit dem abnehmbaren Gehäuseteil zusammenwirkende Anschlagstruktur entweder vom Federdorn oder aber direkt vom Elastomerring ausgebildet.

Nach einer besonders vorteilhaften Weiterbildung der Erfindung weist das abnehmbare Gehäuseteil eine den Elastomerring an der Wechseleinheit in seiner stabilen Ausgangslage haltende Transportsicherung auf. Mit dieser ist vorteilhaft verhindert, dass sich der Elastomerring unbeabsichtigterweise über das offene Bahnende seiner Laufbahn aus dem abnehmbaren Gehäuseteil herausrollen und so seine eingemessene Ausgangslage verlassen kann.

Ein Ausführungsbeispiel der Erfindung, aus dem sich weitere erfinderische Merkmale ergeben, ist in der Zeichnung dargestellt. Es zeigen:
- Figur 1:: eine Seitenansicht der erfindungsgemäßen Rollfeder im Vollschnitt; und
- Figur 2:: eine vollgeschnittene Seitenansicht einer Wechseleinheit, ausgehend aus einer Rollfeder gemäß Figur 1.

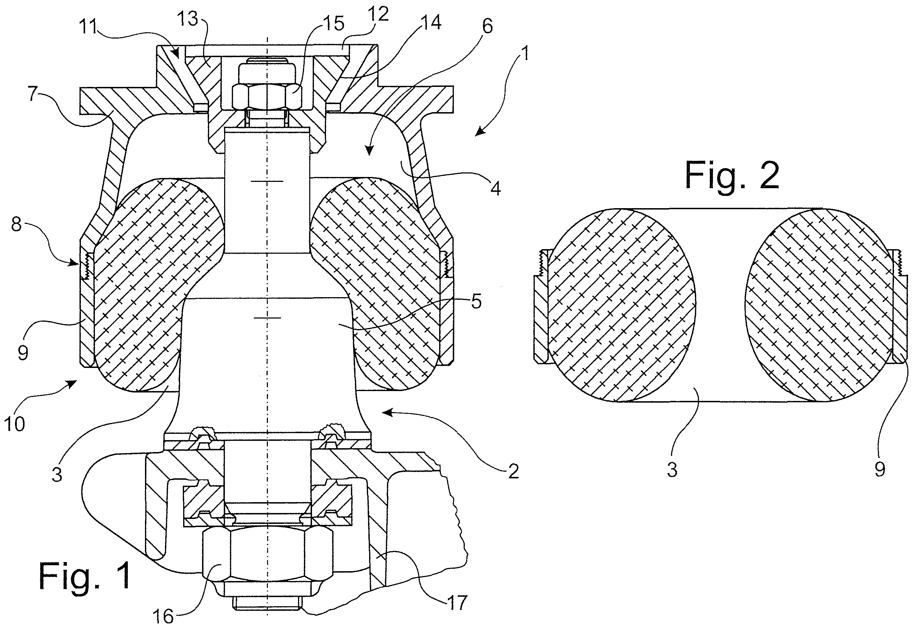

Die Figur 1 zeigt die erfindungsgemäße Rollfeder, bestehend aus einem Federgehäuse 1, einem Federdorn 2 und einem Elastomerring 3, wobei zwischen Federgehäuse 1 und Federdorn 2 ein Ringspalt ausgebildet ist, mit dessen Spaltwandungen 4, 5 eine den Elastomerring 3 axialbeweglich aufnehmende Laufbahn 6 ausgebildet ist. Das Federgehäuse 1 weist eine Gehäusebasis 7 und ein von der Gehäusebasis 7 über eine Verschraubung 8 abnehmbares Gehäuseteil 9 auf, in welchem dasjenige Bahnende der Laufbahn 6 gelegen ist, in welchem der Elastomerring 3 seine stabile Ausgangslage hat. Der Elastomerring 3 und das abnehmbare Gehäuseteil 9 sind zu einer Wechseleinheit 10 miteinander verpresst. Um diese Bauteile in ihrer Verpressung zu sichern, weist der Federdorn 2 einen seinen Federweg am Federgehäuse 1 begrenzenden Anschlag 11 auf, der aus einer konusförmig an der Gehäusebasis 7 ausgebildeten Anschlagfläche 12 und einer ebenfalls konusförmig an einem Federdornaufsatz 13 ausgebildeten Anschlagfläche 14 zusammengesetzt ist. Zum Ausbauen der Wechseleinheit ist der Federdornaufsatz 13 mit einer Verschraubung 15 lösbar auf dem frei schwingenden Ende des Federdornes 2 gehalten. Mit seinem dem frei schwingenden Ende gegenüberliegenden Ende ist der Federdorn 2 über eine Verschraubung 16 fest mit einem Drehgestell 17 eines Schienenfahrzeuges verbunden.

Die Figur 2 zeigt die aus der Rollfeder gemäß Fig. 1 ausgebaute Wechseleinheit 10 mit ihrem abgeschraubten Gehäuseteil 9 sowie mit ihrem im abgeschraubten Gehäuseteil 9 verpressten Elastomerring 3.

## Patentansprüche

1. Rollfeder aus einem Federgehäuse (1), einem Federdorn (2), und wenigstens einem Elastomerring (3), wobei zwischen Federgehäuse (1) und Federdorn (2) ein Ringspalt ausgebildet ist, mit dessen Spaltwandungen (4, 5) eine den Elastomerring (3) axialbeweglich aufnehmende Laufbahn (6) ausgebildet ist, und wobei das Federgehäuse (1) eine Gehäusebasis (7) und ein von der Gehäusebasis (7) über eine lösbare Verbindung abnehmbares Gehäuseteil (9) aufweist, wobei in dem Gehäuseteil (9) wenigstens dasjenige Bahnende der Laufbahn (6) gelegen ist, in welchem der Elastomerring (3) seine stabile Ausgangslage hat, **dadurch gekennzeichnet, dass** allein der Elastomerring (3) und das abnehmbare Gehäuseteil (9) zu einer Wechseleinheit (10) miteinander verpresst sind.

2. Rollfeder nach Anspruch 1, **dadurch gekennzeichnet, dass** die lösbare Verbindung zwischen der Gehäusebasis (7) und dem abnehmbaren Gehäuseteil (9) als Verschraubung (8) ausgebildet ist.

3. Rollfeder nach Anspruch 1 oder 2, **dadurch gekennzeichnet, dass** der Federdorn (2) einen seinen Federweg am Federgehäuse (1) begrenzenden Anschlag (11) aufweist.

4. Rollfeder nach Anspruch 3, **dadurch gekennzeichnet, dass** der Anschlag wenigstens eine an der Gehäusebasis (7) ausgebildete Anschlagfläche (12) aufweist.

5. Rollfeder nach einem der Ansprüche 1 bis 4, **dadurch gekennzeichnet, dass** das abnehmbare Gehäuseteil (9) eine den Elastomerring (3) an der Wechseleinheit (10) in seiner stabilen Ausgangslage haltende Transportsicherung aufweist.

## Claims

1. Roll spring made of a spring housing (1), a spring mandrel (2) and at least one elastomer ring (3), an annular gap being formed between the spring housing (1) and the spring mandrel (2), the gap walls (4, 5) of which form a raceway (6) accommodating the elastomer ring (3) in an axially movable way, and the spring housing (1) having a housing base (7) and a housing part (9) which is removable from the housing base (7) via a detachable connection, wherein at least that track end of the raceway (6) is located in the housing part (9) in which the elastomer ring (3) has its initial stable position,
**characterized in that**
only the elastomer ring (3) and the removable housing part (9) are compressed together into an exchangeable unit (10).

2. Roll spring according to claim 1, **characterized in that** the detachable connection between the housing base (7) and the removable part (9) is designed as a screw connection (8).

3. Roll spring according to claim 1 or 2, **characterized in that** spring mandrel (2) has a stop (11) limiting its travel in the spring housing (1).

4. Roll spring according to claim 3, **characterized in that** the stop has at least one stop surface (12) formed on the housing base (7).

5. Roll spring according to one of claims 1 to 4, **characterized in that** the removable housing part (9) has a transport securing device holding the elastomer ring (3) on the exchangeable unit (10) in its initial stable position.

## Revendications

1. Ressort enroulé constitué d'un boîtier de suspension (1), d'une broche de ressort (2) et d'au moins une bague en élastomère (3), entre le boîtier de suspension (1) et la broche de ressort (2) étant conçue une fente annulaire, à l'aide des parois de fente (4, 5) de laquelle est conçue une piste de roulement (6) réceptionnant la bague en élastomère (3) de manière déplaçable en direction axiale et le boîtier de suspension (1) comportant une base de boîtier (7) et une partie de boîtier (9) susceptible d'être retirée de la base de boîtier (7) par l'intermédiaire d'une liaison amovible, dans la partie de boîtier (9) étant située au moins l'extrémité de piste de la piste de roulement (6) dans laquelle la bague en élastomère (3) a sa position initiale stable, **caractérisé en ce que** seules la bague en élastomère (3) et la partie de boîtier (9) amovible sont compressées l'une avec l'autre en une unité interchangeable (10).

2. Ressort enroulé selon la revendication 1, **caractérisé en ce que** la liaison amovible entre la base de boîtier (7) et la partie de boîtier (9) amovible est conçue sous la forme d'un boulonnage (8).

3. Ressort enroulé selon la revendication 1 ou 2, **caractérisé en ce que** la broche de ressort (2) comporte une butée (11) limitant sa course de débattement sur le boîtier de suspension (1).

4. Ressort enroulé selon la revendication 3, **caractérisé en ce que** la butée comporte une surface de butée (12) conçue sur la base de boîtier (7).

5. Ressort enroulé selon l'une quelconque des revendications 1 à 4, **caractérisé en ce que** la partie de boîtier (9) amovible comporte un blocage au transport maintenant la bague en élastomère (3) dans sa position initiale stable sur l'unité interchangeable (10).
